# EUROPEAN PATENT SPECIFICATION

(11) **EP 0 482 849 B1**
(45) Date of publication and mention of the grant of the patent: **06.08.1997**
(21) Application number: 91309675.6
(22) Date of filing: 18.10.1991
(51) Int. Cl.: H04N 5/262

(54) **Video special effects apparatus**
Gerät für Videotrickeffekte
Appareil pour effets vidéo spéciaux

(30) Priority: 25.10.1990 JP 287828/90
(43) Date of publication of application: 29.04.1992
(73) Proprietor: SONY CORPORATION, Tokyo 141 (JP)
(72) Inventor: Yamamoto, Takao, Shinagawa-ku, Tokyo 141 (JP); Moriwake, Katsuakira, Shinagawa-ku, Tokyo 141 (JP); Kato, Tetsuro, Shinagawa-ku, Tokyo 141 (JP)
(74) Representative: Cotter, Ivan John

(56) References cited:
- WO-A-86/06233
- GB-A- 2 113 059
- US-A- 4 533 952
- US-A- 4 620 228
- PATENT ABSTRACTS OF JAPAN vol. 8, no. 75 (P-266)7 April 1984 & JP-A-58 219 664

## Description

This invention relates to video special effects apparatus which applies video image conversion processing to an input video image.

Apparatus which is capable of adding special effects to an input video signal converts the input video signal into digital data, stores the digital data in a memory, and processes the digital data in the memory. We have disclosed such apparatus in United States patent specification US-A-4 965 844 and Japanese unexamined patent specification 58/219664.

This apparatus displays on a screen a video image which appears as if it had been applied to a three-dimensional curved surface, for example, a cylindrical surface. The necessary processing is done digitally and in order to perform it in real time, the three-dimensional curved surface is approximated to as an assembly of pseudo curved surfaces by assuming that the three-dimensional surface comprises a multiplicity of polygonal (for example, triangular, parallelogrammatic or trapezoidal) surfaces. Mapping is performed by splitting the two-dimensional video image onto each pseudo-curved surface.

GB patent application GB-A-2113059 describes a graphics effects generator for creating a scene-shaking effect by altering the timing between a CRT scan and a memory read in an erratic or pseudorandom manner.

One special effect not yet satisfactorily achieved is an explosion effect.

According to the present invention there is provided a video special effects apparatus for processing an input video signal, the apparatus comprising: a video data memory for temporarily storing the input video signal; a mapping data memory for storing mapping data representative of a destination position of each pixel of the input video data in the video data memory; write address signal generating means for generating a write address signal, to which is added a parameter which becomes larger with lapse of time, for storing data representative of a video conversion function as mapping data in the mapping data memory; read address signal generating means for generating a read address signal for retrieving mapping data from the mapping data memory to be supplied to the video data memory for reading the video data therefrom in order to generate video special effects.

According to the present invention there is also provided a video special effects apparatus for processing an input video signal, the apparatus comprising: a video data memory for temporarily storing the input video signal; a mapping data memory for storing mapping data representative of a destination position of each pixel of the input video data in the video data memory; write address signal generating means for generating a write address signal for storing data representative of a video conversion function as mapping data in the mapping data memory; read address signal generating means for generating a read address signal, to which is added a parameter which becomes larger with lapse of time, for retrieving mapping data from the mapping data memory to be supplied to the video data memory for reading the video data therefrom in order to generate video special effects.

The invention will now be described by way of example with reference to the accompanying drawings, throughout which like parts are referred to by like references, and in which:
Figure 1 is a block diagram of an embodiment of special effects apparatus according to the present invention;
Figures 2A to 2F are diagrams for explaining the operation of the apparatus of Figure 1; and
Figures 3 to 5 are block diagrams of a write address generator, a read address generator, and a trail generating module circuit, respectively, of the apparatus of Figure 1.

The embodiment of special effects apparatus to be described provides a displayed video image with an explosion effect. Thus the video image is displayed as if exploding, by displacing blocks, each comprising a pixel or predetermined number of pixels, towards the periphery of the screen.

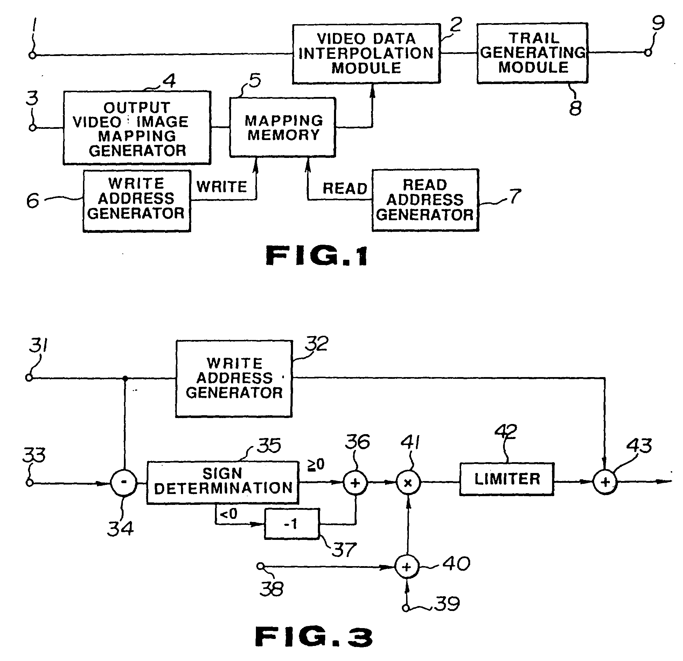

Referring now to Figure 1, video data comprising a digitalized video signal are supplied to an input terminal 1, and thence to a video data interpolation module circuit 2 having a memory structure, wherein the video data are temporarily stored.

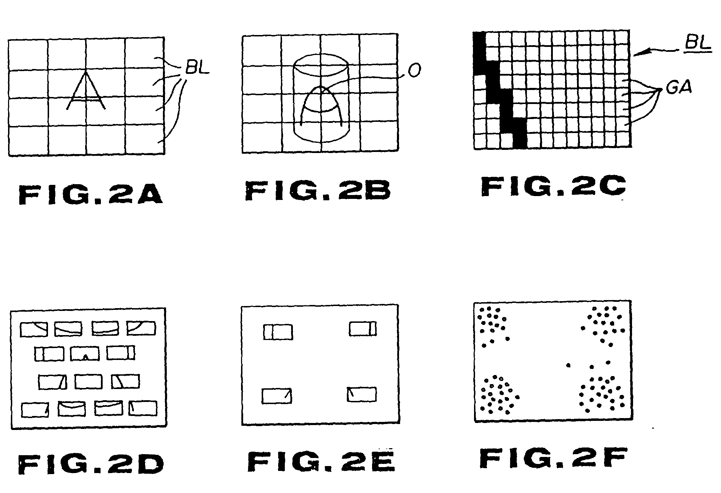

Video conversion data representative of a conversion function for each block BL are supplied to an input terminal 3. The conversion is as if a two-dimensional video image, character "A" as shown in Figure 2A, were applied to a three-dimensional object such as a cylinder as shown in Figure 2B.

The three-dimensional object to which the three-dimensional video image is applied may have other shapes such as a trigonal pyramid, a prism having a parallelogram section or a truncated pyramid. Each block BL comprises, for example, a plurality of pixels GA as shown in Figure 2C. The video image conversion data which have been supplied to the input terminal 3 are fed to an output video image mapping generator 4.

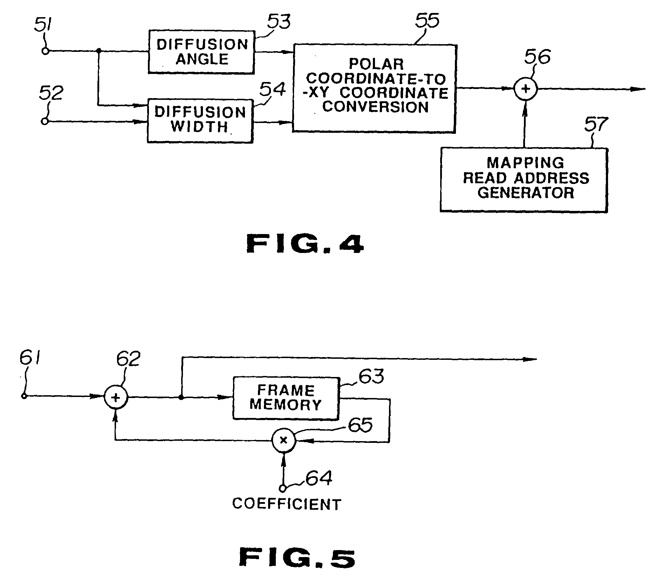

The mapping generator 4 performs an operation, for example, for converting the two-dimensional video image shown in Figure 2A into the three-dimensional video image as shown in Figure 2B, by specifying the destination of each pixel of the two dimensional video image in accordance with the supplied video image conversion data, and supplies the resulting data as mapping data to a video mapping memory 5. The mapping data are written into the mapping memory 5 under control of a write address generator 6 which performs a write control of the mapping data from the mapping generator 4 and has a structure as is shown in, for example, Figure 3.

Referring now to Figure 3, block start coordinate data representative of the start block of each block are supplied to an input terminal 31 from a system controller. The block start coordinate data are supplied to a mapping address generator 32 and to a subtractor 34. The block start coordinate data which have been supplied to the mapping write address generator 32 are supplied to an adder 43 as mapping address data representative of a write address for each block.

A centre position parameter is supplied to an input terminal 33 from the system controller, and represents the centre position 0 of the displayed character "A" shown in Figure 2A, which is determined in the system controller.

The subtractor 34 subtracts the block start coordinate data from the centre position parameter and supplies the subtracted data to a sign determining circuit 35. The position of the block is determined by the subtraction operation. If the result of the subtraction of the block start coordinates from the centre position parameter is positive, it is found that the block is positioned on a right side of the centre position of the video image. If the result is negative, it is found that the block is positioned on the left side of the video image.

The signal determining circuit 35 outputs sign determined data "+" if the subtraction data are "0" (that is, centre position) or "+", and output signal determined data "0" if the subtraction data are negative. The signal determining data "+" are supplied to a multiplier 41 via an adder 36 unchanged, which the sign determining data "O" are supplied to a -1 adding circuit 37. The -1 adding circuit 37 converts the sign determining data "0" into sign determining data "-1", which are then supplied to the multiplier 41 via the adder 36.

The system controller supplies a diffusion (or displacement) parameter which is representative of the shift amount of the block, and increases its value with lapse of time, to an input terminal 38 and random number data to an input terminal 39. The diffusion parameter and the random number data are supplied to an adder 40. The adder 40 adds the supplied diffusion parameter to the random number data and supplies the added data to the multiplied 41.

The multiplier 41 multiplies the added data supplied from the adder 36 by the added data supplied from the adder 40 for generating multiplication data representative of the shift amount of the block in a right or left direction from the centre of the displayed video image. The multiplication data are supplied to a limiter 42.

In brief, by subtracting the block start coordination data from the centre position parameter, the sign representative of on which side, negative or positive, the block is positioned with respect to the centre position is determined. The position of each block to be shifted is determined by multiplying the sign determining data by the diffusion parameter (shift amount), to which is added a random number.

If the diffusion parameter is a constant, that is, the shift amount is a constant, the video image conversion is visually recognized merely as movement of the blocks. Accordingly, the diffusion parameter has added to it the random number data in the adder 40, to make the amount of the movement random. This prevents the movement of each block from becoming visually monotonous, and a real sensation of an actual explosion can be provided.

When the shift amount of the block is randomly determined by multiplying the diffusion parameter by a random number, an excessive shift amount may result, so that the block cannot be displayed on the screen. If such data were outputted unchanged, multiplication data which takes the block outside the screen would be turned back to be displayed on the screen. In order to prevent this, the limiter 42 cuts the output of the multiplication data if a block is shifted to outside of the screen. The multiplication data which have passed through the limiter 42 are supplied to the adder 43.

The adder 43 adds data representative of the write position of each block, supplied from the mapping address generator 32 to the multiplication data representative of the shift amount of each block which has been randomly determined, and outputs the added data as write address data. The write address data are supplied to the mapping memory 5 in accordance with the supplied write address data.

Since the diffusion parameter increases in value with lapse of time, and has random number data added, the mapping data are written into the mapping memory 5 so that diffusion of each block such as gradually to increase with the lapse of time and be random, is performed.

The mapping data which have been written into the mapping memory 5 in such a manner are read out in accordance with a read address from a read address generator 7.

The read address generator 7 randomly specifies the area (one block or a plurality of blocks) among the mapping data written into the mapping memory 5 in units of a block to generate a read address for reading the specified area in units of a pixel. The read address generator 7 has a structure as shown in Figure 4.

In Figure 4, random data which are a random numerical value are supplied to an input terminal 51 from the system controller. The random number data are supplied to a diffusion angle circuit 53 and a diffusion width circuit 54 via the input terminal 51.

The diffusion angle circuit 53 determines the diffusion angle of each pixel in accordance with the supplied random number data and supplies the determined diffusion angle data to a polar coordinate-to-XY coordinate conversion circuit 55.

The diffusion width circuit 54 is supplied with a diffusion area parameter which increases with the lapse of time as well as random number data via an input terminal 52. The diffusion width circuit 54 generates area data which specifies as a diffusion area one or a plurality of blocks which diffuses for each pixel in accordance with a diffusion area parameter which increases its value with lapse of time and random number data. The area data are supplied to the polar coordinate-XY coordinate conversion circuit 55.

The polar coordinate-to-XY coordinate conversion circuit 55 converts the polar coordinates which are defined by the diffusion angle data and the area data into XY coordinates, and supplies the coordinate converted data to an adder 56.

The adder 56 is additionally supplied with mapping read address data from a mapping read address generator 57, which specifies a pixel to be read with an XY coordinate. The adder 56 generates read address data having a diffusion angle which is random for each pixel, by adding the supplied coordinate conversion data to the mapping read address data. The read address data are supplied to the mapping memory 5.

Although reading of the mapping data from the mapping memory 5 is usually performed by consecutive operation in the memory, it is performed by addressing the mapping memory 5 with a read address data having a random diffusion angle for each pixel in the explosion effect. In other words, mapping data each having a random shift amount for each block are stored in the mapping memory 5, the mapping data stored for each block are read with the read address data giving a random diffusion angle for each pixel. In such manner, the mapping data which were read out from the mapping memory 5 are supplied to the interpolation module 2 in which the video data are stored as offset data which are read address data for performing reading of the video data.

This causes the video image displayed on the screen to be gradually split into segments as shown in Figure 2D to 2E. The segments are then diffused (displaced). Finally, each of the segments splits into pixels and is shifted outside the screen. The diffusion speed of the displayed video image is made variable by adjusting the diffusion area parameters supplied from the system controller.

However, this explosion effect of the video image provides only two-dimensional diffusion of the image. In order to provide a three-dimensional explosion effect having a depth sensation, video data read from the interpolation module 2 are supplied to a trail generating module 8 which provides the displayed diffusing video image with afterimage and is formed as is shown in, for example, Figure 5.

In Figure 5, the video data which are read from the video data interpolation module circuit 2 via an input terminal 61 are supplied to an adder 62. The adder 62 is supplied with multiplication data from a multiplier 65 which will be described below, and adds the video data to the multiplication data to output the summation data as a video output to a monitor or the like (not shown) and to a frame memory 63.

The summation data which are supplied to the frame memory 63 are temporarily stored therein and are read by the system controller after being delayed by, for example, one frame.

The summation data which are read from the frame memory 63 are supplied to the multiplier 65. The multiplier 65 is additionally supplied with coefficient data having a given value from the system controller via an input terminal 64. The multiplier 65 multiplies the supplied summation data by the coefficient data and supplies the multiplication data to the adder 62.

As mentioned above, the adder 62 adds the supplied video data to the multiplication data and supplies the summation data to the monitor. This causes the displayed diffusing video image to have added to it an afterimage. Therefore, an explosion effect having a real sensation as if the displayed video image were exploded can be provided.

It is apparent from the foregoing that the special effects apparatus is capable of providing an explosion effect of a displayed video image, as if the displayed video image were exploded by a process comprising the steps of converting input/output video data of, for example, a two-dimensional video image, writing the converted data into the mapping memory 5 in units of blocks with the write address data which become larger with lapse of time, reading the written mapping data in units of pixels with read address data which become larger with lapse of time, and reading the video data from the video data interpolation circuit 2 in which the read mapping data are stored as read address data.

Furthermore, the gradually diffusing displayed video image can have added to it an after-image by supplying the trail generating module 8 with the video data which are read from the video data interpolation module circuit 2. Thus a more real explosion effect can be displayed.

An offset which becomes larger with lapse of time may be added to the read address in the read address generator 7, and the added read address may be supplied to the mapping memory 5.

Although a two-dimensional video image is converted into a three-dimensional video image to provide an explosion effect in the above description, this is not essential.

Alternatively, an explosion effect in which a displayed video image is diffused in units of blocks with lapse of time can be achieved by supplying the video memory with a write or read address which becomes larger in units of blocks, from the write or read address generating means.

Alternatively, an explosion effect in which the displayed video image is diffused in units of pixels with lapse of time can be provided by supplying the video memory with a write or read address which becomes larger in units of pixels with lapse of time.

Alternatively, an explosion effect in which the displayed video image is diffused in units of blocks and is diffused in units of pixels with lapse of time can be provided by supplying the video memory with a write address which becomes larger in units of blocks with lapse of time, from the write address generating means, and with a read address which becomes larger in units of pixels with lapse of time, from the read address generating means.

Alternatively, by providing adding means to which a video signal read from the video memory is supplied, a frame memory into which a video signal which is obtained as a summation output from the adding means, and multiplying means for multiplying the video signal from the frame memory by a given coefficient to output the multiplied video signal, and by adding the video signal read from the video memory to the video signal which has been multiplied by the given coefficient to output the summation signal, the displayed video image which is diffused with lapse of time can have added to it an afterimage. Therefor, a realistic explosion effect, as if the displayed video image were exploded can be provided, and the time taken editing the video data can be reduced.

## Claims

1. A video special effects apparatus for processing an input video signal, the apparatus comprising:
a video data memory (2) for temporarily storing the input video signal;
a mapping data memory (5) for storing mapping data representative of a destination position of each pixel of the input video data in the video data memory (2);
write address signal generating means (6) for generating a write address signal, to which is added a parameter which becomes larger with lapse of time, for storing data representative of a video conversion function as mapping data in the mapping data memory (5); read address signal generating means (7) for generating a read address signal for retrieving mapping data from the mapping data memory (5) to be supplied to the video data memory (2) for reading the video data therefrom in order to generate video special effects.

2. A video special effects apparatus for processing an input video signal, the apparatus comprising:
a video data memory (2) for temporarily storing the input video signal;
a mapping data memory (5) for storing mapping data representative of a destination position of each pixel of the input video data in the video data memory (2);
write address signal generating means (6) for generating a write address signal for storing data representative of a video conversion function as mapping data in the mapping data memory (5);
read address signal generating means (7) for generating a read address signal, to which is added a parameter which becomes larger with lapse of time, for retrieving mapping data from the mapping data memory (5) to be supplied to the video data memory (2) for reading the video data therefrom in order to generate video special effects.

3. Apparatus according to claim 1 or claim 2, wherein said write address signal generating means (6) generates in units of pixels a write address signal to which is added a diffusion parameter which becomes larger with lapse of time.

4. Apparatus accordingly to claim 1 or claim 2, wherein said write address signal generating means (6) generates in units of blocks, each comprising a given number of pixels, a write address signal to which is added a value which becomes larger with lapse of time.

5. Apparatus according to any preceding claim, wherein said read address signal generating means (7) includes offset generating means (53, 54) for generating offset data based upon data representative of a diffusion distance and data representative of a diffusion angle formed based on random number data, and address generating means (56) for forming said read address signal by adding said offset data to a generated address signal.

## Patentansprüche

1. Video-Trickeffekt-Gerät zur Verarbeitung eines Eingangsvideosignals, wobei das Gerät aufweist:
einen Videodatenspeicher (2) zur vorübergehenden Speicherung des Eingangsvideosignals;
einen Erfassungsdatenspeicher (5) zum Speichern von Erfassungsdaten, die bezeichnend sind für eine Bestimmungsposition eines jeden Pixels der Eingangsvideodaten im Videodatenspeicher (2);
eine Schreibadreßsignal-Erzeugungseinrichtung (6) zum Erzeugen eines Schreibadreßsignals, zu dem ein Parameter addiert ist, der mit dem Zeitablauf größer wird, um Daten, die repräsentativ für eine Videoumsetzungsfunktion sind, als Erfassungsdaten im Erfassungsdatenspeicher (5) zu speichern;
eine Leseadreßsignal-Erzeugungseinrichtung (7), um eine Leseadreßsignal zu erzeugen, um Erfassungsdaten aus dem Erfassungsdatenspeicher (5) zu gewinnen, die zum Videodatenspeicher (2) zu liefern sind, um die Videodaten daraus zu lesen, um Video-Trickeffekte zu erzeugen.

2. Video-Trickeffekt-Gerät zur Verarbeitung eines Eingangsvideosignals, wobei das Gerät aufweist:
einen Videodatenspeicher (2) zur vorübergehenden Speicherung des Eingangsvideosignals;
einen Erfassungsdatenspeicher (5) zum Speichern von Erfassungsdaten, die bezeichnend sind für eine Bestimmungsposition eines jeden Pixels der Eingangsvideodaten im Videodatenspeicher (2);
eine Schreibadreßsignal-Erzeugungseinrichtung (6) zum Erzeugen eines Schreibadreßsignals, um Daten, die repräsentativ für eine Videoumsetzungsfunktion sind, als Erfassungsdaten im Erfassungsdatenspeicher (5) zu speichern;
eine Leseadreßsignal-Erzeugungseinrichtung (7), um eine Leseadreßsignal zu erzeugen, zu dem ein Parameter addiert ist, der mit dem Zeitablauf größer wird, um Erfassungsdaten aus dem Erfassungsdatenspeicher (5) zu gewinnen, die zum Videodatenspeicher (2) zu liefern sind, um die Videodaten daraus zu lesen, um Video-Trickeffekte zu erzeugen.

3. Gerät nach Anspruch 1 oder 2, wobei die Schreibadreßsignal-Erzeugungseinrichtung (6) in Pixeleinheiten ein Schreibadreßsignal erzeugt, zu welchem ein Diffusionsparameter addiert wird, der mit dem Zeitablauf größer wird.

4. Gerät nach Anspruch 1 oder 2, wobei die Schreibadreßsignal-Erzeugungseinrichtung (6) in Blockeinheiten, wobei jede eine vorgegebene Anzahl von Pixeln umfaßt, ein Schreibadreßsignal erzeugt, zu welchem ein Wert addiert wird, der mit dem Zeitablauf größer wird.

5. Gerät nach einem der vorhergehenden Ansprüche, wobei die Leseadreßsignal-Erzeugungseinrichtung (7) eine Offset-Erzeugungseinrichtung (53, 54) besitzt, um Offset-Daten auf der Basis von Daten zu erzeugen, die repräsentativ sind für eine Diffusionsentfernung, und von Daten, die repräsentativ sind für einen Diffusionswinkel, die auf der Basis von Zufallszahldaten gebildet sind, und eine Adreßerzeugungseinrichtung (56), um das Leseadreßsignal zu bilden, wobei die Offset-Daten zu einem erzeugten Adreßsignal addiert werden.

## Revendications

1. Appareil pour effets spéciaux vidéo pour traiter un signal vidéo d'entrée, l'appareil comprenant :
une mémoire de données vidéo (2) pour stocker temporairement le signal vidéo d'entrée ;
une mémoire de données de mappage (5) pour stocker des données de mappage représentatives d'une position de destination de chaque pixel des données vidéo d'entrée dans la mémoire de données vidéo (2) ;
un moyen de génération de signal d'adresse d'écriture (6) pour générer un signal d'adresse d'écriture auquel est ajouté un paramètre qui devient plus important au fil de l'écoulement du temps, pour stocker des données représentatives d'une fonction de conversion vidéo en tant que données de mappage dans la mémoire de données de mappage (5) ;
un moyen de génération de signal d'adresse de lecture (7) pour générer un signal d'adresse de lecture pour retrouver des données de mappage dans la mémoire de données de mappage (5) à appliquer sur la mémoire de données vidéo (2) pour lire dedans les données vidéo afin de générer des effets spéciaux vidéo.

2. Appareil pour effets spéciaux vidéo pour traiter un signal vidéo d'entrée, l'appareil comprenant :
une mémoire de données vidéo (2) pour stocker temporairement le signal vidéo d'entrée ;
une mémoire de données de mappage (5) pour stocker des données de mappage représentatives d'une position de destination de chaque pixel des données vidéo d'entrée dans la mémoire de données vidéo (2) ;
un moyen de génération de signal d'adresse d'écriture (6) pour générer un signal d'adresse d'écriture pour stocker des données représentatives d'une fonction de conversion vidéo en tant que données de mappage dans la mémoire de données de mappage (5) ;
un moyen de génération de signal d'adresse de lecture (7) pour générer un signal d'adresse de lecture, auquel est additionné un paramètre qui devient plus important au fil de l'écoulement du temps, pour retrouver des données de mappage dans la mémoire de données de mappage (5) à appliquer sur la mémoire de données vidéo (2) pour lire dedans les données vidéo afin de générer des effets spéciaux vidéo.

3. Appareil selon la revendication 1 ou 2, dans lequel ledit moyen de génération de signal d'adresse d'écriture (6) génère dans des unités de pixels un signal d'adresse d'écriture auquel est ajouté un paramètre de diffusion qui devient plus important au fil de l'écoulement du temps.

4. Appareil selon la revendication 1 ou 2, dans lequel ledit moyen de génération de signal d'adresse d'écriture (6) génère dans des unités de blocs, chacune comprenant un nombre donné de pixels, un signal d'adresse d'écriture auquel est ajoutée une valeur qui devient plus importante au fil de l'écoulement du temps.

5. Appareil selon l'une quelconque des revendications précédentes, dans lequel ledit moyen de génération de signal d'adresse de lecture (7) inclut un moyen de génération de décalage (53, 54) pour générer des données de décalage sur la base de données représentatives d'une distance de diffusion et de données représentatives d'un angle de diffusion formées sur la base de données de nombre aléatoire, et un moyen de génération d'adresse (56) pour former ledit signal d'adresse de lecture en ajoutant lesdites données de décalage à un signal d'adresse généré.
